# EUROPEAN PATENT APPLICATION

(11) **EP 4 287 100 A1**
(43) Date of publication of application: **06.12.2023**
(21) Application number: 23172327.1
(22) Date of filing: 09.05.2023
(51) Int. Cl.: G06Q 30/0251, G06Q 30/0242

(54) **METHOD AND VEHICLE SYSTEM FOR ENABLING SERVICE OFFERING DATA TO BE PROVIDED TO AN INTERFACE DEVICE**

(30) Priority: 31.05.2022 SE 2250647
(71) Applicant: VOLVO TRUCK CORPORATION, 405 08 Göteborg (SE)
(72) Inventor: SHIRE, Joshua, 411 39 Göteborg (SE); TISTELGREN, Johan, 441 41 Alingsås (SE)
(74) Representative: Valea AB

(57) **Abstract**

The present invention relates to a method performed by a vehicle system (101) for enabling service offering content data to be provided to an interface device associated with a vehicle (100). The vehicle system (101) obtains vehicle event data from the vehicle (100) and obtains service offering data. The service offering data comprises service offering content data and service offering correlation data. The vehicle system (101) compares at least a part of the vehicle event data with at least a part of the service offering correlation data. When a result of the comparing fulfills a criterion, the vehicle system (101) determines a time for providing at least a part of the service offering content data to an interface device associated with a user of the vehicle (100).

## Description

### TECHNICAL FIELD

The invention relates generally to a vehicle system, a method performed by the vehicle system, a vehicle comprising the vehicle system, a computer program and a computer readable medium.

More particularly, the invention relates to enabling service offering content data to be provided to an interface device associated with a vehicle.

The invention can be applied in at least partly electrical heavy-duty vehicles, such as trucks, buses and construction equipment etc. Although the invention will be described with respect to a truck, the invention is not restricted to this particular vehicle, but may also be used in other vehicles such as buses, trailers, wheel loaders, articulated haulers, excavators, backhoe loaders, passenger cars, marine vessels etc. It may also be applied in various industrial construction machines or working machines. It is applicable in fully electrically operated vehicles as well as in hybrid vehicles, comprising also a combustion engine, and in vehicles only operated by a combustion engine, i.e. not having any electrical engine. The term vehicle will be used herein when referring to any of the above types of vehicles.

### BACKGROUND

It is well known to provide advertisements and service offerings to vehicles, such as to users of vehicles and to other persons associated with vehicles. There are several different ways of providing such advertisements and service offerings to vehicles. For example, a vehicle can display, based on navigation data and matching velocity, advertisements to persons or drivers of vehicles when they are expected to be in proximity of the advertising vehicle. The advertisement matches personal data of the persons or drivers, i.e. the selection of advertisement is optimized based on the personal data. The advertisement is displayed for the amount of time that the persons or driver will likely be able to view the advertisement.

It is also known to equip vehicles with a global position system device in order to determine the vehicle's location and to produce an audio advertisement message within the vehicle based on its location.

It is further known to present an advertisement via a display and/or speaker onboard a vehicle. Vehicle event data, for example the path travelled by the vehicle over time, is used as a basis for selecting an advertisement to be presented, i.e. in the selection of which advertisement to present.

Vehicle event data is being gathered to create a user profile for the purpose of transmitting that user profile to a remote advertising service, so that it may retrieve an advertisement based on content of the user profile data.

However, there is a need for further improvement and optimization of providing service offerings to vehicles. Therefore, there is a need to at least mitigate or solve this issue.

### SUMMARY

An object of the invention is to obviate at least one of the above disadvantages and to improve enabling of service offering content data to be provided to an interface device associated with a vehicle.

According to a first aspect of the invention, the object is achieved by a method according to claim 1. The method is performed by a vehicle system and is for enabling service offering content data to be provided to an interface device associated with a vehicle. The vehicle system obtains service offering data. The vehicle system obtains vehicle event data from the vehicle. The service offering data comprises service offering content data and service offering correlation data. The vehicle system compares at least a part of the vehicle event data with at least a part of the service offering correlation data. When a result of the comparing fulfils a criterion, the vehicle system determines a time for providing at least a part of the service offering content data to an interface device associated with a user of the vehicle.

By the provision of the method where the vehicle system determines the time for providing at least a part of the service offering content data to an interface device associated with a user of the vehicle, i.e. by determining when to provide the service offering content data to the interface device, the enabling of service offering content data to be provided to the interface device associated with the vehicle is improved. The service offering content data may be provided to the interface device in a time where it most appropriate, for example such that the likelihood of that the user will utilize or have a need to utilize the service offering is as high as possible.

According to one embodiment, the criterion may be associated with one or more of: current vehicle mode, previous vehicle mode, current driver driving time, time of day and vehicle position. An advantage of the criterion may be that the time for providing at least a part of the service offering content data may be determined with an increased accuracy.

According to another embodiment, the vehicle system may determine how to provide at least a part of the service offering content data to the interface device. With the possibility to determine how the service offering content data should be provided, e.g. to provide it in a visual form, using audio etc., the service offering content data would be provided in a manner that is suitable to the user's status. For example, it may be unsuitable to provide the service offering content data in a visual form when the user is busy with driving tasks associated with an increased safety risk, for example driving in rush hours, but then it may be more suitable to use audio to provide the service offering content data. In another example, if the vehicle is standing still, for example during charging of the vehicle, it may be suitable to provide the service offering content data in visual form.

According to another embodiment, the interface device may be a display and the providing of the service offering content data to the interface device comprises displaying the service offering content data on the display. According to another embodiment, the interface device may be an audio device and the providing of the service offering content data to the interface device may comprise providing the service offering content data to the interface device through the audio device. An advantage of this may be that it provides flexibility in how to provide the service offering content data to the user. The method of providing the service offering content data to the user may be adapted to the safety risk in the current situation of the vehicle such that it is as low as possible.

According to another embodiment, the vehicle system may determine which part of the service offering content data that should be provided to the interface device. The vehicle system may initiate provisioning of the determined part of the service offering content data on the interface device at the determined time. An advantage of this may be that, not only all parts of the service offering content data needs to be provided to the interface device initially. For example, a link to a web page may be initially provided to the interface device, and the user may obtain more other parts of the service offering content data, e.g. more details, when clicking on or selecting the link. The link may be a textual link, or it may be a clickable or selectable image. If the vehicle is currently in a scenario where the safety risk is above a threshold, a limited part of the service offering content data may be provided to the interface device. This way the user may be disturbed as little as possible and may focus on the driving tasks.

According to another embodiment, the time for providing the service offering content data may be the same as when the result of the comparing fulfills the criterion, or the time for providing the service offering content data may be after the result of the comparing fulfills the criterion. An advantage of providing the service offering content data at the same time may be that there may be as little time delay as possible or on time delay at all between when the comparing fulfills the criterion and the providing of the service offering content data. An advantage of providing the service offering content data after the comparing fulfills the criterion, i.e. at some time later, may be that the providing of the service offering content data may be planned in advance and the risk for providing the service offering content data too late may be reduced.

According to another embodiment, when the service offering content data has been provided to the interface device, the vehicle system may provide, to a service offering system, status information of the provisioning of the determined part of the service offering content data. An advantage of this may be that the vehicle system may easily inform the service offering system if the provisioning of the determined part of the service offering content data has succeeded or failed.

According to yet another embodiment, the vehicle system may monitor user interactions via the interface device and in response to the provided service offering content data. The status information may comprise information associated with the monitored user interactions. An advantage of this may be that the vehicle system may adapt and improve future service offering content data such that it is even more tailored to the user.

According to yet another embodiment, the vehicle event data may comprise one or more of: vehicle mode data, driver time information and vehicle location. By using the vehicle event data, the providing of the service offering content data may be adapted to the current and/or future status of the vehicle and/or the user of the vehicle.

According to another embodiment, the interface device may be mounted onboard the vehicle or is comprised in a handheld device arranged to be used by a user of the vehicle. An advantage of an interface device mounted onboard the vehicle may be that an existing interface may be utilized, e.g. an interface that is currently used for other interface purposes. It is not necessary to increase the complexity of the vehicle by installing another interface device. An advantage of a handheld device may be that the service offering content data may be provided on the interface device and seen/heard by the user even when he/she is not onboard the vehicle. The user may hear/see the service offering content data even when he/she is at a distance from the vehicle.

According to a second aspect of the invention, the object is achieved by a vehicle system according to claim 11. The vehicle system is for enabling service offering content data to be provided to an interface device associated with a vehicle. The vehicle system is arranged to perform a method according to the first aspect. Advantages and effects of the second aspect of the invention are similar to the advantages and effects with respect to the first aspect of the invention. It shall also be noted that all embodiments of the first aspect of the invention are applicable to and combinable with all embodiments of the second aspect of the invention and vice versa.

According to a third aspect of the invention, the object is achieved by a vehicle according to claim 12. The vehicle comprises a vehicle system of the second aspect. Advantages and effects of the third aspect of the invention are similar to the advantages and effects with respect to the second aspect of the invention. It shall also be noted that all embodiments of the second aspect of the invention are applicable to and combinable with all embodiments of the third aspect of the invention and vice versa.

According to a fourth aspect of the invention, the object is achieved by a computer program according to claim 13. The computer program comprises program code means for performing the method of the first aspect when said program is run on a computer. The computer may be or may be comprised in the vehicle system of the second aspect. Advantages and effects of the fourth aspect of the invention are similar to the advantages and effects with respect to the first aspect of the invention. It shall also be noted that all embodiments of the first aspect of the invention are applicable to and combinable with all embodiments of the fourth aspect of the invention and vice versa.

According to a fifth aspect of the invention, the object is achieved by a computer readable medium according to claim 14. The computer readable medium carries a computer program comprising program code means for performing the method of the first aspect when the program is run on a computer. The computer may be or may be comprised in the vehicle system of the second aspect. Advantages and effects of the fifth aspect of the invention are similar to the advantages and effects with respect to the first aspect of the invention. It shall also be noted that all embodiments of the first aspect of the invention are applicable to and combinable with all embodiments of the fifth aspect of the invention and vice versa.

The present disclosure is not limited to the features and advantages mentioned above. A pers skilled in the art will recognize additional features and advantages upon reading the following detailed description.

### BRIEF DESCRIPTION OF THE DRAWINGS

The present disclosure will now be described in more detail by way of example only in the following detailed description by reference to the appended drawings in which:
- Fig. 1: is a schematic drawing illustrating a vehicle
- Fig. 2: is a flow chart illustrating a method.
- Fig. 3a: is a schematic drawing illustrating a vehicle system.
- Fig. 3b: is a schematic drawing illustrating a vehicle system.

The drawings are not necessarily to scale, and the dimensions of certain features may have been exaggerated for the sake of clarity. Emphasis is instead placed upon illustrating the principle.

### DETAILED DESCRIPTION

The invention relates to how to decide when in time, based on vehicle event data, to provide service offering content data to a user of a vehicle. Additionally, to determine what form should the service offering content data take based on the collected vehicle event data.

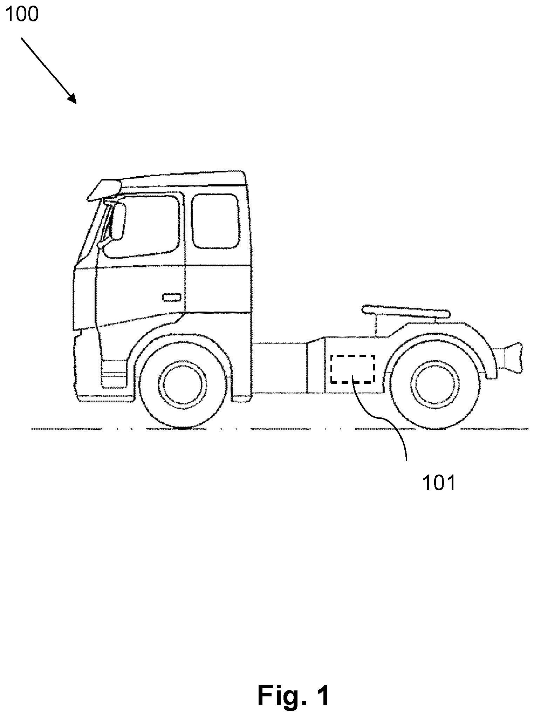

**Fig. 1** is a schematic drawing illustrating a **vehicle 100.** The vehicle may be a truck, bus, construction equipment, trailer, wheel loader, excavator, passenger car, a marine vessel, an electrically operated vessel, a working machine, stationary backup power solution etc., or any other type of vehicle mentioned herein. The vehicle 100 may be fully electrically operated or it may be a hybrid vehicle comprising also a combustion engine. The vehicle 100 may be fully operated by a combustion engine, i.e. not having any electrical engine. The term vehicle will be used herein when referring to any of the above types of vehicles.

The vehicle 100 comprises a **vehicle system 101.** The vehicle system 101 may be located onboard the vehicle 100, i.e. mounted inside the vehicle 100. The vehicle system 101 may be located at any suitable location onboard the vehicle 100. The vehicle system 101 may be partly located onboard the vehicle 100 and partly located at some other location, e.g. a remote location. The vehicle system 101 may be referred to as a vehicle device, a vehicle unit, a control unit, interaction profile system etc. The vehicle system 10 may be an electronic vehicle system. The vehicle system 101 may comprise processing circuitry which is adapted to run a computer program as disclosed herein. The vehicle system 101 may comprise hardware and/or software for performing the method described herein. The vehicle system 101 may be denoted a computer. The vehicle system 101 may be constituted by one or more separate sub-systems. The vehicle system 101 may communicate by use of wired and/or wireless communication means.

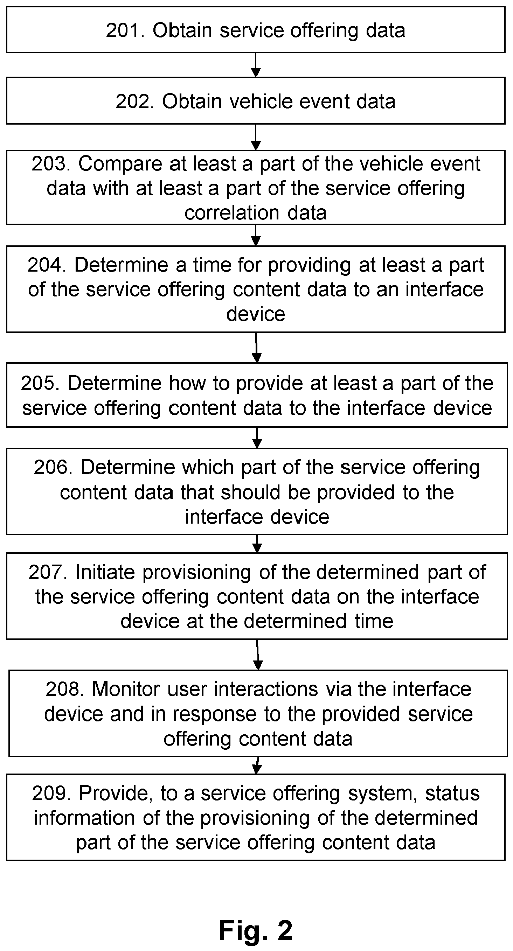

A method will now be described seen from the perspective of the vehicle system 101. **Fig. 2** is a flowchart describing the present method in the vehicle system 101, for enabling service offering content data to be provided to an interface device associated with a vehicle. The method comprises at least one of the following steps to be performed by the vehicle system 101, which steps may be performed in any suitable order than described below:

### Step 201

The vehicle system 101 obtains service offering data.

The service offering may comprise offerings or advertisements of goods or services or discounts for same. For example, "come here to buy this", "we will give you discount x on y with this coupon code", "get a free z if you come here", etc.

The service offering data comprises service offering content data and service offering correlation data. Thus, the service offering data comprises a first part and a second part, where the first part is the part that is provided to the interface device and the second part is the part that is used to determine the part that should be provided to the interface device.

The service offering content data may be the actual data that is provided to an interface, i.e. the offer itself. The service offering content data may be the data that is displayed on a display or provided as audio information through e.g. a speaker. For example, the service offering data may comprise a short text and graphics, to be seen immediately, , then a longer text to be seen when engaged with, e.g. clicked, or selected. The service offering content data may comprise one or more of: service offering name or identification, service offering location, service offering expiry time etc.

The service offering correlation data may be data that is correlated with or associated with the service offering content data. The service offering correlation data may be the data that the vehicle system 101 uses to determine which service offering content data that should be provided to the interface device. The service offering correlation data may be metadata. The service offering correlation data may comprise data indicating the location of the service offer and the business it applies to, whether it should only be manually searchable or whether it may appear based on a trigger expression, and then the trigger expression itself, it will match either to given vehicle event data and cause the described action.

The service offering data may be obtained from a database, a service offer backend etc. The service offering data may be obtained from a plurality of available service offering data.

The obtaining, e.g. downloading, of the service offering data may be on service configuration on the vehicle 100, upon an application installation.

### Step 202

The vehicle system 101 obtains vehicle event data from the vehicle 100.

The vehicle event data may comprise one or more of:
- Vehicle mode data, where the mode may indicate for example that the vehicle is standing still or moving, key on/off, ferry mode, that the vehicle engine is turned on or off etc.
- Driver time information, for example driver time information related to driver time regulations related to how many hours the driver is allowed to drive before he/she is required to take a break.
- Vehicle location, a geographical location of the vehicle obtained from for example a navigation system onboard the vehicle.
- User profile, e.g. predetermined user preferences related to service offerings, user history data related to the user history of utilizing service offerings.
- Which apps are currently or have recently been opened by a user of the vehicle 100.
- How long has the driver been driving.
- The time of day.
- What is the planned driver route of the vehicle in the vehicle navigation system, etc.

The above are examples of vehicle event data available to the vehicle system 101.

### Step 203

The vehicle system 101 compares at least a part of the vehicle event data with at least a part of the service offering correlation data. For example, a part of the vehicle event data may indicate that the user of the vehicle has, according to driver regulations, 1 hour left until he/she is required to rest. The vehicle event data may further indicate a current vehicle location, a travel route and vehicle speed. This part of the vehicle event data may be compared with a part of the service offering correlation data that provides information about restaurants, parking places etc.

### Step 204

When a result of the comparing fulfills a criterion, the vehicle system 101 determines a time for providing at least a part of the service offering content data to an interface device associated with a user of the vehicle.

The criterion may be associated with one or more of:
- current vehicle mode, e.g. whether the vehicle is currently moving or standing still and/or
- previous vehicle mode, , e.g. whether the vehicle has previously been moving or standing still and/or
- current driver driving time, e.g. for how long time the user, e.g. the driver, has been driving the vehicle, for example with respect to driving time regulations; and/or
- time of day, and/or
- vehicle position, e.g. a geographical position obtained by e.g. a navigation system.

For example, a part of the vehicle event data that indicates that the user of the vehicle has, according to driver regulations, 1 hour left until he/she is required to rest may be compared with a list of restaurants and parking places to determine which restaurants and parking places that the vehicle will pass in the coming 1 hour of driving, taking the vehicle's current location, an expected vehicle speed and the travel route into account. The vehicle system 101 may then determine that service offering content data related to an offer to get a 10% discount on dinner at restaurant X should be provided at for example 30 minutes before the user needs to take a rest. Then the user has reasonable time to determine if he/she would like to take a rest at restaurant X or not.

The service offering content data may provide a service offering for one or more service offering providers, for example one or more restaurants that provides discounts on food, one or more parking places with discounts on electric charging of the vehicle etc.

The interface device may be a display and the service offering content data may be provided to the interface device by displaying on the display. The interface device may be an audio device and the service offering content data may be provided to the interface device through the audio device.

The time for providing the service offering content data may be the same as when the result of the comparing fulfills the criterion that the result, or the time for providing the service offering content data may be after the result of the comparing fulfills the criterion.

The interface device may be mounted onboard the vehicle 100 or it may be comprised in a handheld device arranged to be used by a user of the vehicle 100.

The interface device may be an offer presentation system.

The interface device shall be implemented as an application. It may be arranged to present a full page of various service offerings if it is selected directly by the user, or to pop up for a less intrusive advertisement if an interaction profile is matched while the user is doing something else, e.g. stopping the vehicle after driving for some time with a local time around noon may trigger an offer for a nearby lunch restaurant. This interface device may also include audio elements to draw attention.

### Step 205

The vehicle system 101 may determine how to provide at least a part of the service offering content data to the interface device. How to provide at least a part of the service offering content data to the interface device may be described as in which way to provide the at least a part of the service offering content data. For example, the at least a part of the service offering content data may be provided using audio information or visual information, or both audio information and visual information.

This step 205 may comprise to determine which of a plurality of available displays the at least a part of the service offering content data should be provided to. For example the at least a part of the service offering content data may be provided on one display, on two displays or on all displays that are available in the vehicle. The step may comprise to determine that the at least a part of the service offering content data should appear as a complete screen, a bar on the top of one screen, etc.

The vehicle system 101 may determine to provide the service offering content data as audio information where a part of the service offering content data is spoken out via a speaker comprised onboard the vehicle 100, i.e. mounted inside the vehicle 100, or in a handheld device used by the user of the vehicle 109. The audio information may be a notification chime arranged to draw the user's attention to the fact that there is an available service offering and that he will obtain more information about the service offering if he performs some action, e.g. open a web browser, clicking on a link etc.

### Step 206

The vehicle system 101 may determine which part of the service offering content data that should be provided to the interface device. For example, a link to a web page may be initially provided to the interface device, and the user may obtain more other parts of the service offering content data, e.g. more details, when clicking on or selecting the link. The link may be a textual link, or it may be a clickable or selectable image. If the vehicle is currently in scenario where the safety risk is above a threshold, a limited part of the service offering content data may be provided to the interface device. This way the user may be disturbed as little as possible and may focus on the driving tasks.

### Step 207

The vehicle system 101 may initiate provisioning of the determined part of the service offering content data on the interface device at the determined time for providing. This may be described as triggering the service offering content data to be provided to the interface device at the determined time.

### Step 208

The vehicle system 101 may monitor user interactions via the interface device and in response to the provided service offering content data. The user interactions may be the user's interaction with the interface device, e.g. what information the user selects or clicks on in the display, when the user selects or clicks on different items in the display etc.

### Step 209

When the service offering content data has been provided to the interface device, the vehicle system 101 may provide, to a service offering system, status information of the provisioning of the determined part of the service offering content data.

The service offering system may be a service offering device, a service offer backend system, or a service offer backend device.

The status information may comprise information associated with the monitored user interactions from step 208.

The status information may be used to facilitate billing, e.g. which service offers were displayed, how long were they visible, any interactions with the offering, etc. For example, restaurant X may be billed for displaying a certain number of service offers and for a visibility time of 3 minutes.

The service offering system may be implemented as an internet accessible cloud backend for the application.

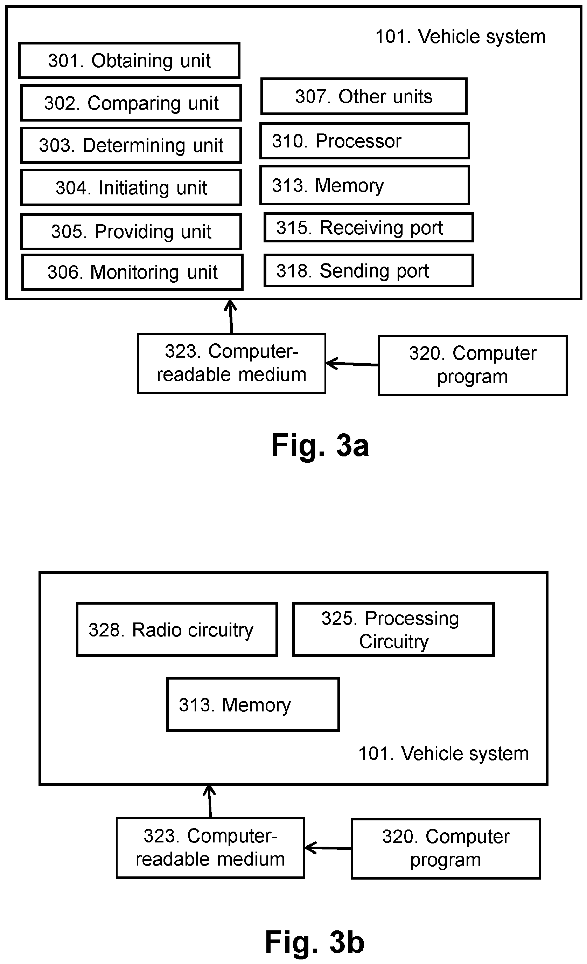

To perform the method steps shown in fig. 2 for enabling service offering content data to be provided to an interface device associated with a vehicle 100, the vehicle system 101 may comprise an arrangement as shown in **fig. 3a** and/or **fig. 3b****.**

The vehicle system 101 is arranged to, e.g. by means of an **obtaining unit 301,** obtaining vehicle event data from the vehicle 100. The vehicle event data may comprise one or more of: vehicle mode data, driver time information and vehicle location. The obtaining unit 301 may also be referred to as an obtaining module, an obtaining means, an obtaining circuit, means for obtaining etc. The obtaining module 301 may be a **processor 310** of the vehicle system 101 or comprised in the processor 310 of the vehicle system.

The vehicle system 101 is arranged to, e.g. by means of the obtaining unit 301, obtain service offering data. The service offering data comprises service offering content data and service offering correlation data.

The vehicle system 101 is arranged to, e.g. by means of a **comparing unit 302,** compare at least a part of the vehicle event data with at least a part of the service offering correlation data. The comparing unit 302 may also be referred to as a comparing module, a comparing means, a comparing circuit, means for comparing etc. The comparing unit 302 may be a processor 310 of the vehicle system 101 or comprised in the processor 310 of the vehicle system.

The vehicle system 101 is arranged to, e.g. by means of a **determining unit 303,** when a result of the comparing fulfills a criterion, determine a time for providing at least a part of the service offering content data to an interface device associated with a user of the vehicle 100. The criterion may be associated with one or more of: current vehicle mode, previous vehicle mode, current driver driving time, time of day and vehicle position. The interface device may be mounted onboard the vehicle 100 or it may be comprised in a handheld device arranged to be used by a user of the vehicle 100. The determining unit 303 may also be referred to as a determining module, a determining means, a determining circuit, means for determining etc. The determining unit 303 may be a processor 310 of the vehicle system 101 or comprised in the processor 310 of the vehicle system.

The interface device may be a display and the service offering content data may be provided to the interface device by displaying on the display. The interface device may be an audio device and the service offering content data may be provided to the interface device through the audio device.

The vehicle system 101 may be arranged to, e.g. by means of the determining unit 303, determine how to provide at least a part of the service offering content data to the interface device.

The vehicle system 101 may be arranged to, e.g. by means of the determining unit 303, determine which part of the service offering content data that should be provided to the interface device.

The vehicle system 101 may be arranged to, e.g. by means of an **initiating unit 304,** initiate provisioning of the determined part of the service offering content data on the interface device at the determined time for providing. The initiating unit 304 may also be referred to as an initiating module, an initiating means, an initiating circuit, means for initiating etc. The initiating unit 304 may be a processor 310 of the vehicle system 101 or comprised in the processor 310 of the vehicle system.

The time for providing the service offering content data may be the same as when the result of the comparing fulfills the criterion that the result, or the time for providing the service offering content data may be after the result of the comparing fulfills the criterion. The vehicle system 101 may be arranged to, e.g. by means of a **providing unit 305,** when the service offering content data has been provided to the interface device, provide, to a service offering system, status information of the provisioning of the determined part of the service offering content data. The status information may comprise information associated with the monitored user interactions. The providing unit 305 may also be referred to as a providing module, a providing means, a providing circuit, means for providing etc. The providing unit 305 may be a processor 310 of the vehicle system 101 or comprised in the processor 310 of the vehicle system.

The vehicle system 101 may be arranged to, e.g. by means of a monitoring unit 306, monitor user interactions via the interface device and in response to the provided service offering content data. The monitoring unit 306 may also be referred to as a monitoring module, a monitoring means, a monitoring circuit, means for monitoring etc. The monitoring unit 306 may be a processor 310 of the vehicle system 101 or comprised in the processor 310 of the vehicle system.

The present mechanism for enabling service offering content data to be provided to an interface device associated with a vehicle 100 may be implemented through one or more processors, such as the processor 310 in the arrangement depicted in fig. 3a and/or fig. 3b, together with computer program code for performing the functions described herein. The processor may be for example a Digital Signal Processor (DSP), Application Specific Integrated Circuit (ASIC) processor, Field-programmable gate array (FPGA) processor or microprocessor. The program code mentioned above may also be provided as a computer program, for instance in the form of a data carrier carrying computer program code for performing the present disclosure herein when being loaded into the vehicle system 101. One such carrier may be in the form of a CD ROM disc. It is however feasible with other data carriers such as a memory stick. The computer program code can be provided as pure program code on a server and downloaded to the vehicle system 101.

Fig. 3a and fig. 3b depict two different examples in panels 3a) and 3b), respectively, of the arrangement that the vehicle system 101 may comprise. The vehicle system 101 may comprise the following arrangement depicted in fig 3a.

The present disclosure related to the vehicle system 101 may be implemented through one or more processors, such as a **processor 310** in the vehicle system 101 depicted in fig. 3a, together with computer program code for performing the functions and actions described herein. A processor, as used herein, may be understood to be a hardware component. The program code mentioned above may also be provided as a computer program, for instance in the form of a data carrier carrying computer program code for performing the present disclosure when being loaded into the vehicle system 101. One such carrier may be in the form of a CD ROM disc. It is however feasible with other data carriers such as a memory stick. The computer program code may be provided as pure program code on a server and downloaded to the vehicle system 101.

The vehicle system 101 may comprise a **memory 313** comprising one or more memory units. The memory 313 is arranged to be used to store obtained information, store data, configurations, schedulings, and applications etc. to perform the methods herein when being executed in the vehicle system 101.

The vehicle system 101 may receive information from, e.g. other vehicle systems, a remote storage, another vehicle, a service offering system etc, through a **receiving port 315.** The receiving port 315 may be, for example, connected to one or more antennas in vehicle system 101. The vehicle system 101 may receive information from another structure in the system through the receiving port 315. Since the receiving port 315 may be in communication with the processor 310, the receiving port 315 may then send the received information to the processor 310. The receiving port 315 may also be configured to receive other information.

The processor 310 in the vehicle system 101 may be configured to transmit or send information to e.g. other vehicle systems, a remote storage, another vehicle, a service offering system etc, through a **sending port 318,** which may be in communication with the processor 310, and the memory 313.

The vehicle system 101 may comprise the obtaining unit 301, the comparing unit 302, the determining unit 303, the initiating unit 304, the providing unit 305, the monitoring unit 306 and other unit(s) 307.

Those skilled in the art will also appreciate that the obtaining unit 301, the comparing unit 302, the determining unit 303, the initiating unit 304, the providing unit 305, the monitoring unit 306 and other unit(s) 307 described above may refer to a combination of analogue and digital circuits, and/or one or more processors configured with software and/or firmware, e.g., stored in memory, that, when executed by the one or more processors such as the processor 310, perform as described above. One or more of these processors, as well as the other digital hardware, may be comprised in a single Application-Specific Integrated Circuit (ASIC), or several processors and various digital hardware may be distributed among several separate components, whether individually packaged or assembled into a System-on-a-Chip (SoC).

The different units 301-307 described above may be implemented as one or more applications running on one or more processors such as the processor 310.

Thus, the methods described herein for the vehicle system 101 may be respectively implemented by means of a **computer program 320,** comprising instructions, i.e., software code portions, which, when executed on at least one processor 310, cause the at least one processor 310 to carry out the actions described herein, as performed by the vehicle system 101. The computer program 320 may be stored on a **computer-readable storage medium 323**. The computer-readable storage medium 323, having stored thereon the computer program 320, may comprise instructions which, when executed on at least one processor 310, cause the at least one processor 310 to carry out the actions described herein, as performed by the vehicle system 101. The computer-readable storage medium 323 may be a non-transitory computer-readable storage medium, such as a CD ROM disc, or a memory stick. The computer program 320 may be stored on a carrier containing the computer program 320 just described, wherein the carrier is one of an electronic signal, optical signal, radio signal, or the first computer-readable storage medium 323, as described above.

The vehicle system 101 may comprise a communication interface configured to facilitate communications between the vehicle system 101 and other or devices, e.g., e.g. other vehicle systems, a remote storage, another vehicle, a service offering system or another structure. The interface may comprise a transceiver configured to transmit and receive radio signals over an air interface in accordance with a suitable standard.

The vehicle system 101 may comprise the following arrangement depicted in fig. 3b. The vehicle system 101 may comprise a **processing circuitry 325,** e.g., one or more processors such as the processor 310, in the vehicle system 101 and the memory 313.

The vehicle system 101 may also comprise a **radio circuitry 328,** which may comprise e.g., the receiving port 315 and the sending port 318. The processing circuitry 325 may be configured to, or operable to, perform the method actions according to fig. 2, in a similar manner as that described in relation to fig. 3a. The radio circuitry 328 may be configured to set up and maintain at least a wireless connection with the vehicle system 101. Circuitry may be understood herein as a hardware component.

The vehicle 100 comprises a vehicle system 101, as described herein.

Hence, the present disclosure also relates to the vehicle system 101 operative to operate in the vehicle 100. The vehicle system 101 may comprise the processing circuitry 325 and the memory 310. The memory 310 comprises instructions executable by the processing circuitry 325. The vehicle system 101 is operative to perform the actions described herein in relation to the vehicle system 101, e.g., in fig. 2.

Summarized, the invention relates to how to decide when, based off vehicle event data, to provide service offering content data and how it should best be provided. The invention optimizes the time and manner the service offering content data is offered based of the user actions associated with the vehicle.

In the previously known solutions, an offboard system uses vehicle data to determine which service offering to display or play, or to build a profile of the driver for optimizing the selection of service offerings. However, the present invention uses vehicle data locally in the vehicle system, i.e. locally in the vehicle 100, to optimize the time and manner of providing the service offering content data.

A vehicle system, e.g. an interaction profile system, may be arranged to collect vehicle event data, e.g. vehicle mode, stored driver time information, location, and present user interactions with displays and menus for the purpose of determine which service offering shall be presented, when shall it be presented, and how shall it be presented.

The vehicle system, e.g. the service offer backend, may be arranged to store available service offerings, the desired interaction profiles and presentation profile, and to receive information back from the vehicle.

The vehicle system, e.g. an offer presentation system, may be arranged to present a service offering based off the detection of a matching interaction profile. It may also transmit the particulars of the service offer display session to the service offer backend to facilitate billing, e.g. which service offers were displayed, how long were they visible, any interactions with the offering, etc.

One or more of the interaction profile system, the service offer backend and the offer presentation system may be seen as subsystems of the vehicle system.

The present disclosure is not limited to the above. Various alternatives, modifications and equivalents may be used. Therefore, disclosure herein should not be taken as limiting the scope. A feature may be combined with one or more other features.

The term "at least one of A and B" should be understood to mean "only A, only B, or both A and B.", where A and B are any parameter, number, indication used herein etc.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

The steps of the methods may be performed in another order than the order in which they appear herein.

## Claims

1. A method performed by a vehicle system (101) for enabling service offering content data to be provided to an interface device associated with a vehicle (100), the method comprising:
*obtaining* (201) service offering data, wherein the service offering data comprises service offering content data and service offering correlation data;
*obtaining* (202) vehicle event data from the vehicle (100);
*comparing* (203) at least a part of the vehicle event data with at least a part of the service offering correlation data; and
when a result of the comparing fulfills a criterion, *determining* (204) a time for providing at least a part of the service offering content data to an interface device associated with a user of the vehicle (100).

2. The method according to claim 1, wherein the criterion is associated with one or more of: current vehicle mode, previous vehicle mode, current driver driving time, time of day and vehicle position.

3. The method according to any of the preceding claims, comprising:
*determining* (205) how to provide at least a part of the service offering content data to the interface device.

4. The method according to any of the preceding claims,
wherein the interface device is a display and wherein providing the service offering content data to the interface device comprises displaying the service offering content data on the display; or
wherein the interface device is an audio device and wherein providing the service offering content data to the interface device comprises proving the service offering content data through the audio device.

5. The method according to any of the preceding claims, comprising:
*determining* (206) which part of the service offering content data that should be provided to the interface device; and
*initiating* (207) provisioning of the determined part of the service offering content data on the interface device at the determined time.

6. The method according to any of the preceding claims,
wherein the time for providing the service offering content data is the same as when the result of the comparing fulfills the criterion; or
wherein the time for providing the service offering content data is after the result of the comparing fulfills the criterion.

7. The method according to any of the preceding claims, comprising:
when the service offering content data has been provided to the interface device, *providing* (209), to a service offering system, status information of the provisioning of the determined part of the service offering content data.

8. The method according to claim 7, comprising:
*monitoring* (208) user interactions via the interface device and in response to the provided service offering content data; and
wherein the status information comprises information associated with the monitored user interactions.

9. The method according to any of the preceding claims, wherein the vehicle event data comprises one or more of: vehicle mode data, driver time information and vehicle location.

10. The method according to any of the preceding claims, wherein the interface device is mounted onboard the vehicle (100) or is comprised in a handheld device arranged to be used by a user of the vehicle (100).

11. A vehicle system (101) for enabling service offering content data to be provided to an interface device associated with a vehicle (100), the vehicle system (101) being arranged to perform a method according to any of claims 1-10

12. A vehicle (100) comprising a vehicle system (101) of claim 11.

13. A computer program comprising program code means for performing the steps of any of claims 1-10 when said program is run on a computer.

14. A computer readable medium carrying a computer program comprising program code means for performing the steps of any of claims 1-10 when said program is run on a computer.
